# EUROPEAN PATENT APPLICATION

(11) **EP 3 975 539 A1**
(43) Date of publication of application: **30.03.2022**
(21) Application number: 20831414.6
(22) Date of filing: 09.06.2020
(51) Int. Cl.: H04N 5/225, H04M 1/02

(54) **APERTURE DIAPHRAGM COVER USED FOR CAMERA MODULE, CAMERA ASSEMBLY AND ELECTRONIC EQUIPMENT**

(30) Priority: 28.06.2019 CN 201921004935 U; 28.06.2019 CN 201910575396
(71) Applicant: GUANGDONG OPPO MOBILE TELECOMMUNICATIONS CORP., LTD., Wusha, Chang'an Dongguan Guangdong 523860 (CN)
(72) Inventor: WEI, Yi, Dongguan, Guangdong 523860 (CN); ZHANG, Haiyu, Dongguan, Guangdong 523860 (CN); XIE, Zhong, Dongguan, Guangdong 523860 (CN)
(74) Representative: Ipside
(86) International application number: PCT/CN2020/095151
(87) International publication number: WO 2020/259279

(57) **Abstract**

The present disclosure provides an aperture diaphragm cover, a camera assembly and an electronic equipment. The camera assembly comprises a camera module and an aperture diaphragm cover; the aperture diaphragm cover comprises a connecting part and a functional part that are in an integrated structure; the connecting part is used for being connected to the camera module; the functional part is disposed correspondingly to a lens of the camera and is provided with through holes, the through holes being light incident holes of the lens of the camera module. The aperture diaphragm cover can be detached from the camera module by the described manner to form two separate structural portions. Thereby, the size of the lens of the camera module can be separately reduced, and thus further, the size of black sides of an electronic equipment could be reduced, thereby increasing the screen-to-body ratio of the electronic equipment.

## Description

### TECHNICAL FIELD

The present disclosure relates to the field of electronic device technologies, and in particular to an aperture diaphragm cover for a camera module, a camera assembly, and an electronic device.

### BACKGROUND

With increasing consumer demand for a screen-to-body ratio of electronic devices, developers have proposed screen structure solutions for improving a screen-to-body ratio of electronic devices, such as screens with a narrow bezel, a bang-like notch, a water-drop-like notch, a hole-like notch (including a through-hole and a blind hole). There is also a composite solution that introduces a mechanical retractable structure that is paired with a front camera of traditional structure; or there is also a dual-screen solution that retains only a rear camera, and the rear camera is used as a front camera and a rear camera. There is even a flip structure camera, which flips a rear camera to be used as a front camera. All of the above structural solutions are designed to further increase the screen-to-body ratio of electronic devices in order to acquire a wider visual experience.

Among the screens, the screen structures with a bang-like notch, a water-drop-like notch and other structures are more destructive to the screen, screen costs will be relatively increased; and, beauty of an integrated screen is visually destroyed, which cannot be accepted by some consumers. Other full-screen solutions (such as a telescopic structure camera, a dual-screen solution of canceling the front camera and only retaining the rear camera, and a flip camera solution) have higher requirements for a whole device. As the complexity of the structure increases, difficulties of stacking and detailed design of the whole device will increase, and the cost will also increase accordingly. Although screen design solutions with a narrow bezel and a hole-like notch design are used in many electronic devices, which may make the whole device seem to be more integrated, but constrained by a size of the front camera and different assembly methods, the screen-to-body ratio is smaller compared to other solutions, and it has been difficult to overcome.

### SUMMARY OF THE DISCLOSURE

According to one aspect of the present disclosure, a camera assembly is provided, wherein the camera assembly includes a camera module and an aperture diaphragm cover; the aperture diaphragm cover includes a connecting part and a functional part that are in an integrated structure, the connecting part is configured to be connected to the camera module, the functional part is disposed correspondingly to a lens of the camera module, a through hole is defined in the functional part, and the through hole is configured to be a light incident hole of the lens of the camera module.

According to another aspect of the present disclosure, an electronic device is provided, wherein the electronic device includes: a transparent cover including a first surface and a second surface defined away from each other; a display panel affixed on the first surface of the transparent cover, wherein an area of the display panel is less than an area of the first surface; a camera assembly disposed on the same side of the transparent cover as the transparent cover, wherein the camera assembly includes a camera module and an aperture diaphragm cover, the aperture diaphragm cover includes a connecting part and a functional part that are in an integrated structure, the connecting part is configured to be connected to the camera module, the functional part is disposed correspondingly to a lens of the camera module, a through hole is defined in the functional part, and the through hole is configured to be a light incident hole of the lens of the camera module; and a projection of the connecting part projected on the first surface of the transparent cover and a projection of the display panel projected on the first surface of the transparent cover are at least partly overlapped.

According to further another aspect of the present disclosure, an aperture diaphragm cover for a camera module is provided, the aperture diaphragm cover includes a connecting part and a functional part that are in an integrated structure, the connecting part is configured to be connected to the camera module, the functional part is disposed correspondingly to a lens of the camera module, a through hole is defined in the functional part, and the through hole is configured to be a light incident hole of the lens of the camera module.

The benefits of the present disclosure is that the camera assembly provided in the present disclosure includes a camera module and an aperture diaphragm cover; the aperture diaphragm cover includes a connecting part and a functional part that are in an integrated structure, the connecting part is configured to be connected to the camera module, the functional part is disposed correspondingly to a lens of the camera module, a through hole is defined in the functional part, and the through hole is configured to be a light incident hole of the lens of the camera module. So that, the aperture diaphragm cover may be separated from the camera module to form two independent structural components, and the lens of the camera module alone may be made smaller to further reduce a size of a black edge of an electronic device, thereby increasing a screen-to-body ratio of the electronic device.

### BRIEF DESCRIPTION OF THE DRAWINGS

In order to more clearly illustrate the technical solutions in the embodiments of the present disclosure, the drawings that need to be used in the embodiments or exemplary technical descriptions are briefly described below. Obviously, the drawings described below are only some embodiments of the present disclosure. For one skilled in the art, other drawings may be acquired from the drawings without creative work.
FIG. 1 is a schematic structural diagram of an electronic device with a narrow bezel according to an embodiment of the present disclosure.
FIG. 2 is a schematic structural diagram of a partial side view of the electronic device according to an embodiment of the present disclosure.
FIG. 3 is a schematic structural diagram of a bottom view of the electronic device in FIG. 2 along an X-direction.
FIG. 4 is a schematic structural diagram of a side view of a camera module in FIG. 2 according to an embodiment of the present disclosure.
FIG. 5 is a schematic structural diagram of a top view of the camera module in FIG. 4.
FIG. 6 is a schematic structural diagram of a side view of the camera module in FIG. 2 according to another embodiment of the present disclosure.
FIG. 7 is a schematic structural diagram of a top view of the camera module in FIG. 6.
FIG. 8 is a schematic structural diagram of a side view of a transparent cover in FIG. 2 according to an embodiment of the present disclosure.
FIG. 9 is a schematic structural diagram of a bottom view of the transparent cover in FIG. 8.
FIG. 10 is a schematic structural diagram of a light-shielding structure being affixed on a notch defined at a first surface of the transparent cover in FIG. 8.
FIG. 11 is a schematic structural diagram of a partial side view of the electronic device according to another embodiment of the present disclosure.
FIG. 12 is a schematic structural diagram of a partial side view of the electronic device according to a further embodiment of the present disclosure.
FIG. 13 is a schematic structural diagram of a bottom view of the electronic device in FIG. 12 along the X-direction.
FIG. 14 is a schematic structural diagram of a partial side view of the electronic device according to yet a further embodiment of the present disclosure.
FIG. 15 is a schematic structural diagram of a bottom view of the electronic device in FIG. 14 along the X-direction.
FIG. 16 is a schematic structural diagram of an aperture diaphragm cover in FIG. 14 according to an embodiment of the present disclosure.
FIG. 17 is a schematic structural diagram of a top view of the aperture diaphragm cover in FIG. 14 according to another embodiment of the present disclosure.
FIG. 18 is a schematic structural diagram of a partially enlarged area of the light-shielding structure in FIG. 15 according to another embodiment of the present disclosure.
FIG. 19 is a schematic structural diagram of a partial side view of the electronic device according to an embodiment of the present disclosure.
FIG. 20 is a schematic structural diagram of a bottom view of the electronic device in FIG. 19 along the X-direction.
FIG. 21 is a schematic structural diagram of a partial side view of the electronic device according to another embodiment of the present disclosure.
FIG. 22 is a schematic structural diagram of a partial side view of the electronic device according to a further embodiment of the present disclosure.

### DETAILED DESCRIPTION

The present disclosure will be described clearly and thoroughly herein by referring to the accompanying drawings of the embodiments. Apparently, the embodiments described herein are only a part of, but not all of, the embodiments of the present disclosure. For those skilled in the art, other embodiments may be obtained based on the provided embodiments without any creative work, and the other embodiments are also covered by the present disclosure.

In case of mentioning "first", "second", and the like, in an embodiment of the present disclosure, the "first", "second", and the like are only for description, and may not be understood as indicating or implying relative importance of a feature. The feature defined by "first", "second" may indicate or imply at least one of such features being included. Moreover, the technical solutions of various embodiments may be combined with each other, but only on the basis that the person of ordinary skill in the art may implement the technical solutions. When the combination of the solutions contradicts each other or may not be implemented, the combination should be considered as non-existent and is not within the scope of the protection claimed by the present utility model.

References herein to "embodiment" may indicate that a particular feature, structure, or characteristic described in combination with an embodiment may be included in at least one embodiment of the present disclosure. The presence of the phrase in various sections of the specification may not indicate one same embodiment, or an embodiment that is mutually exclusive or alternative to other embodiments. The person of ordinary skills in the art may explicitly and implicitly understand that, the embodiments described herein may be combined with other embodiments.

A camera assembly is provided by the present disclosure, wherein the camera assembly includes a camera module and an aperture diaphragm cover, the aperture diaphragm cover includes a connecting part and a functional part that are in an integrated structure, the connecting part is configured to be connected to the camera module, the functional part is disposed correspondingly to a lens of the camera module, a through hole is defined in the functional part, and the through hole is configured to be a light incident hole of the lens of the camera module.

An incision structure is disposed at at least one side of the functional part, and the incision structure is configured to be an installation avoidance area for the camera assembly.

A light-shielding structure is disposed at one side of the functional part away from the camera module.

The light-shielding structure and the functional part are integrally formed by a two-color injection molding process.

A hardness of the light-shielding structure is less than a hardness of the aperture diaphragm cover.

The light-shielding structure is made of soft rubber.

A position-retaining wall is disposed at one side of the functional part away from the camera module, the position-retaining wall is disposed between the light-shielding structure and the through hole, the position-retaining wall is configured to constrain a position relationship between the light-shielding structure and the through hole, and a height of the position-retaining wall is less than a height of the light-shielding structure.

The position-retaining wall is defined around the through hole, the light-shielding structure is defined around a periphery of the position-retaining wall away from the through hole, and the light-shielding structure surrounds at least half of the position-retaining wall.

The through hole and the lens of the camera module are disposed coaxially, and a diameter of the through hole is less than a diameter of the lens of the camera module.

An electronic device is provided by an embodiment according to another aspect of the present disclosure, wherein the electronic device includes: a transparent cover including a first surface and a second surface defined away from each other; a display panel affixed on the first surface of the transparent cover, wherein an area of the display panel is less than an area of the first surface; a camera assembly disposed on the same side of the transparent cover as the transparent cover, wherein the camera assembly includes a camera module and an aperture diaphragm cover, the aperture diaphragm cover includes a connecting part and a functional part that are in an integrated structure, the connecting part is configured to be connected to the camera module, the functional part is disposed correspondingly to a lens of the camera module, a through hole is defined in the functional part, and the through hole is configured to be a light incident hole of the lens of the camera module; and a projection of the connecting part projected on the first surface of the transparent cover and a projection of the display panel projected on the first surface of the transparent cover are at least partly overlapped.

An incision structure is disposed at at least one side of the functional part, a part of the display panel extends to the incision structure, and the incision structure is configured to be a cooperative installation avoidance area for the camera assembly and the display panel.

A light-shielding structure is disposed at the functional part extending towards the transparent cover, the light-shielding structure supports the first surface of the transparent cover, and the light-shielding structure is configured to block light emitted by the display panel to avoid the light emitted by the display panel from interfering the camera module.

The display panel includes a display area and a non-display area, the display area and the non-display area are disposed adjacently, or a part of the display area surrounds the non-display area, a projection of the non-display area projected on the first surface of the transparent cover and a projection of the display area projected on the first surface of the transparent cover are at least partly overlapped.

The non-display area includes a first contact surface and a second contact surface disposed away from each other, and a side surface connecting to the first contact surface and the second contact surface, the first contact surface is disposed near the transparent cover, a light-shielding structure is disposed at between the first contact surface and the transparent cover, and a light-shielding structure is disposed on the side surface.

The display panel includes a display area and a non-display area, the display area and the non-display area are disposed adjacently, or a part of the display area surrounds the non-display area, a projection of the non-display area projected on the first surface of the transparent cover and a projection of the display area projected on the first surface of the transparent cover are at least partly overlapped; the non-display area includes a first contact surface and a second contact surface disposed away from each other, and a side surface connecting to the first contact surface and the second contact surface, the first contact surface is disposed near the transparent cover, a light-shielding structure is disposed at between the first contact surface and the transparent cover, and a light-shielding structure is disposed on the side surface; wherein the light-shielding structure between the first contact surface and the transparent cover in the non-display area is a light-blocking tape or a light-blocking ink.

The light-shielding structure of the side surface in the non-display area is a light-blocking ink.

An aperture diaphragm cover for a camera module is provided by an embodiment according to a further aspect of the present disclosure, wherein the aperture diaphragm cover includes a connecting part and a functional part that are in an integrated structure, the connecting part is configured to be connected to the camera module, the functional part is disposed correspondingly to a lens of the camera module, a through hole is defined in the functional part, and the through hole is configured to be a light incident hole of the lens of the camera module.

A light-shielding structure is disposed at one side of the functional part away from the camera module.

A position-retaining wall is disposed at one side of the functional part away from the camera module, the position-retaining wall is disposed between the light-shielding structure and the through hole, the position-retaining wall is configured to constrain a position relationship between the light-shielding structure and the through hole, and a height of the position-retaining wall is less than a height of the light-shielding structure.

The position-retaining wall is defined around the through hole, the light-shielding structure is defined around a periphery of the position-retaining wall away from the through hole, and the light-shielding structure surrounds at least half of the position-retaining wall.

A "communication terminal" (or simply "terminal"), used in the present disclosure, includes, but not limited to, a terminal that is configured to transfer data over a wired connection (e.g., over a public switched telephone network (PSTN), a digital subscriber line (DSL), a digital cable, a direct cable connection, and/or another data connection/network) and/or receiving/sending communication signals via a wireless interface (e.g., for a cellular network, a wireless local area network (WLAN), a digital television network such as a DVB-H network, a satellite network, an AM-FM radio transmitter, and/or another communication terminal). A communication terminal that is configured to communicate via a wireless interface may be referred to as a "wireless communication terminal", "wireless terminal", or "mobile terminal". Examples of mobile terminals include, but not limited to, satellite phones, cell phones, or personal communication system (PCS) terminals data processing capabilities; radio telephones, pagers, Internet/Intranet access, Web browsers, notepads, calendars, and/or PDA of a receiver of global positioning system (GPS); and conventional laptop and/or handheld receivers or other electronic devices that includes a radiotelephone transceiver. A cell phone is a mobile terminal equipped with a cellular communication module.

The technical solution of the present disclosure is to improve a full-screen structure such as a screen with a narrow bezel and a screen with a hole-like notch, in order to further narrow a black edge around the camera of the screen with the narrow bezel or the screen with the hole-like notch, so as to increase a screen-to-body ratio of an electronic device. The technical solution for the screen with the narrow bezel is mainly to achieve the purpose of "small head" (a top of the electronic device that is non-display area is reduced), while the technical solution for the screen with the hole-like notch is mainly to achieve the purpose of reducing the black edge around the camera.

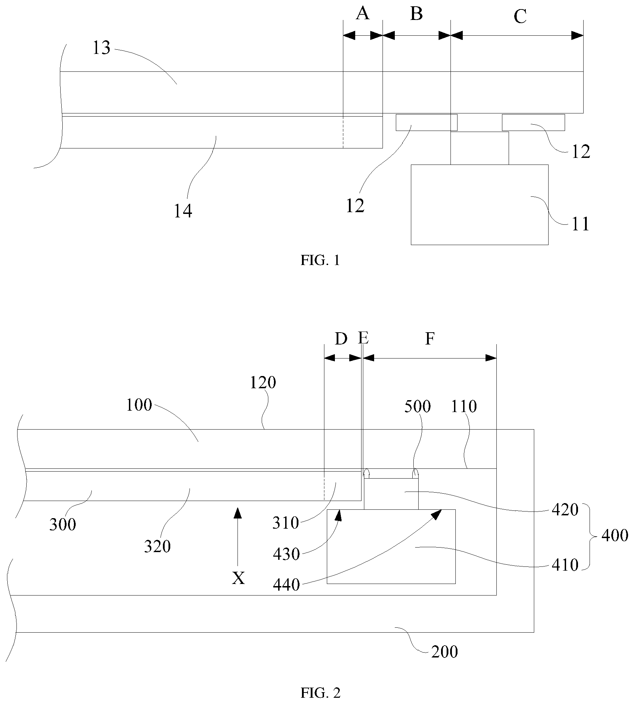

For the technical solution using a narrow bezel, the related technical means generally adopts the structural design as shown in FIG. 1. FIG. 1 is a schematic structural diagram of an electronic device with a narrow bezel according to an embodiment of the present disclosure. The electronic device has a front camera 11 is sealed against dust by a foam 12 and a glass cover 13. Meanwhile, the foam 12 is also configured to block light emitted by a display panel 14, to prevent the light emitted by the display panel 14 from projecting into the camera to produce "ghost". Further, an area A shown in FIG. 1 may represent a non-display area of the display panel 14, and a general width of the area A is 0.95-1.5mm. The area B shown in FIG. 1 may represent a gap between the display panel 14 and the camera 11; due to a large size of foam 12 and it is necessary to reserve the gap between the camera 11 and the display panel 14 configured for assembling, so the minimum width of the area B is 0.8-0.9mm. The area C shown in FIG. 1 may represent a gap between the camera 11 and an edge of the glass cover 13. Therefore, a sum of the widths of the areas A, B, and C in FIG. 1 may represent a size of the black edge of the electronic device. In a full-screen design scheme with a narrow bezel, the main purpose is to minimize the sum of the widths of the areas A, B, and C, so as to increase the screen-to-body ratio of the electronic device.

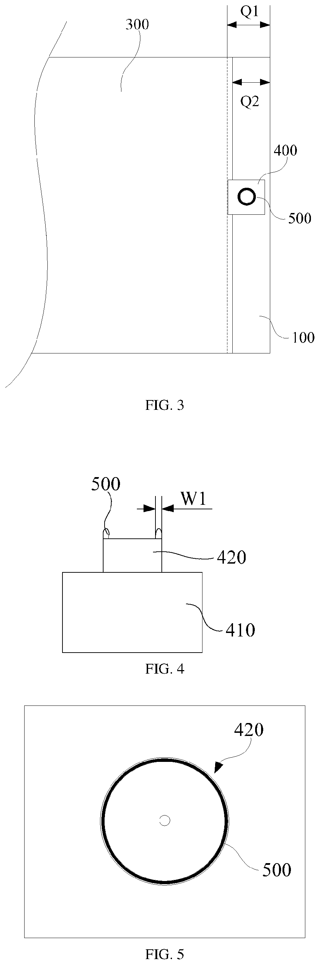

Please refer to FIG. 2 and FIG. 3 together, FIG. 2 is a schematic structural diagram of a partial side view of the electronic device according to an embodiment of the present disclosure, and FIG. 3 is a schematic structural diagram of a bottom view of the electronic device in FIG. 2 along an X-direction.

It should be noted that the electronic device in an embodiment of the present disclosure may be a cell phone, a tablet, a laptop, a wearable device, and other terminal devices having a camera. The electronic device includes, but not limited to, a transparent cover 100, a housing 200, a display panel 300, a camera module 400, and a light-shielding structure 500. The housing 200 is connected to the transparent cover 500 to enclose together to define a housing space, the display panel 300, the camera module 400, the light-shielding structure 500 and other structural components are disposed in the housing space. Further, the illustration of the structure of the electronic device and the description of the components in present disclosure only give the structural components related to the present disclosure; for other structural components of the electronic device (such as circuit boards, processors, etc.), which will not be specifically introduced by the present disclosure.

The transparent cover 100 includes a first surface 110 and a second surface 120 defined away from each other, which may be made of glass or transparent resin, corresponding to a rigid screen or a flexible screen. The display panel 300 is affixed on the first surface 110 of the transparent cover 100, thus a thickness of the electronic device may be reduced and a touch sensitivity of the display panel 300 is also increased. An area of the display panel 300 is less than an area of the first surface 110, to make the transparent cover 100 completely cover the display panel 300, thereby protecting the display panel 300. The second surface 120 of the transparent cover 100 serves as an outer surface of the electronic device for consumer interaction with the electronic device and may be configured to receive touch operations such as clicks, swipes, etc. from the user. Certainly, in some other embodiments, the second surface 120 may also be disposed with other film layers such as a tempered film, a frosted film, a decorative film, a anti-peep film, a water condensation film, and so on, so that the electronic device provides different experience effects to the consumers.

The terms "first" and "second" in present disclosure are used for descriptive purposes only, and are not to be construed as indicating or implying relative importance or implicitly specifying the number of technical features indicated. Thus, the features stated with "first" and "second" may explicitly or implicitly include at least one such feature.

The camera module 400 is disposed on the same side of the transparent cover 100 as the display panel 300, for example, both are disposed on a side near the first surface 110; and the camera module 400 and the display panel 300 are disposed side by side and adjacent to each other. Further, the camera module 400 includes a holder 410 and a lens 420. The holder 410 may be used for mounting and fixing the camera module 400, for example, the camera module 400 is fixed to the housing 200 by the holder 410. The lens 420 may be disposed towards the first surface 110 of the transparent cover 100, so that ambient light passing through the transparent cover 100 may be captured directly, thus enabling the electronic device to perform functions such as face recognition, photography, and payment etc. through the camera module 400. Certainly, in some other embodiments, the lens 420 may not be disposed towards the first surface 110 of the transparent cover 100, for example, by disposing a structure such as a prism between the lens 420 and the transparent cover 100 to reflect the ambient light passing through the transparent cover 100 to the lens 420, the above function of the electronic device may also be realized.

Further, a first extension surface 430 is disposed on one side of the holder 410 connected to the lens 420, and a second extension surface 440 is disposed on another side of the holder 410 connected to the lens 420. The second extension surface 440 and the first extension surface 430 are located on opposite sides of the lens 420, as shown in FIG. 2.

In the present embodiment, the display panel 300 is attached against the first extension surface 430 and a side of the lens 420, as shown in FIG. 2, thereby reducing a spacing between the camera module 400 and the display panel 300 to an extremely small size and thereby increasing the screen-to-body ratio of the electronic device, and the thickness of the electronic device may also be reduced. Theoretically, if the machining accuracy and assembly accuracy allow, the spacing between camera module 400 and display panel 300 may be zero, which will greatly reduce the size of the black edge of the electronic device and thus greatly increase the screen-to-body ratio of the electronic device.

The area Q1 shown in FIG. 3 may represent a black edge area of the electronic device, that is an area from a dashed line to an edge of the transparent cover 100, and that is the non-display area observed on a front panel of the electronic device. The area Q2 shown in FIG. 3 may represent an area between the display panel 300 and the edge of transparent cover 100. A difference between Q1 and Q2,that is, an area Q1-Q2 may represent the non-display area 310 of the display panel 300, and the area is generally configured to dispose structural components of the display panel 300 such as alignment.

Please refer to FIG. 2 again, the area D shown in FIG. 2 (that is the area Q1-Q2 in FIG. 3) may represent the non-display area 310 (generally 0.95-1.5 mm) of the display panel 300, a width of the area Q1-Q2 is generally determined by the structure of the display panel 300 itself and is not within a scope of the present embodiment. Accordingly, all areas of display panel 300 except the non-display area 310 described above may represent a display area 320 for consumer interaction with the electronic device. In some embodiments, the display area 320 and non-display area 310 are disposed adjacent to each other and may correspond to the narrow bezel. In some other embodiments, the display area 320 is partially disposed around the non-display area 310 and may correspond to a screen with a bang-like notch and a screen with a water-drop like notch. In some other embodiments, the display area 320 is disposed completely around the non-display area 310, which may correspond to a screen with a hole-like notch. The area E shown in FIG. 2 may represent a gap between the camera module 400 and the display panel 300. The present embodiment, by the display panel 300 attached against the first extension surface 430 and the side of the lens 420, that is, the non-display area 310 of display panel 300 laps with the first extension surface 430. Theoretically, a width of the area E may be minimized to 0. The area F shown in FIG. 2 may indicate a width from the camera module 400 to the edge of transparent cover 100. Therefore, a sum of the widths of the areas D, E, and F in FIG. 2 may represent the size of the black edge of the electronic device (that is the width of the area Q1 in FIG. 3). In the full-screen design with the narrow bezel, the main purpose is to minimize the sum of the widths of the areas D, E, and F and thus increase the screen-to-body ratio of the electronic device.

Further, the light-shielding structure 500 is disposed between the camera module 400 and the transparent cover 100. On the one hand, the light-shielding structure 500 may be configured to block the light emitted by the display panel 300 to avoid the light emitted by the display panel 300 from interfering with the camera module 400, to eliminate the "ghost" phenomenon of the camera module 400. On the other hand, for the lens 420, the light-shielding structure 500 may be used as an aperture diaphragm. The aperture diaphragm is an entity that is used for limiting the light beam in the optical system; according to the application scenarios and the different needs, there are mainly a hole diaphragm, field of view diaphragm, a vignetting diaphragm, a light canceling diaphragm, and so on. Certainly, the lens 420 itself may also be disposed with the above-mentioned aperture diaphragm. In the present embodiment, the light-shielding structure 500 may be located in the black edge area Q1 of the electronic device, as shown in FIG. 2 and FIG. 3. At this point, the effect of the width of the light-shielding structure 500 on the screen-to-body ratio of the electronic device may be almost ignored, and more consideration may be given to the role of the light-shielding structure 500 as a diaphragm for the lens 420.

Please refer to FIG. 4 and FIG. 5, FIG. 4 is a schematic structural diagram of a side view of a camera module in FIG. 2 according to an embodiment of the present disclosure, and FIG. 5 is a schematic structural diagram of a top view of the camera module in FIG. 4.

The light-shielding structure 500 is disposed in a ring shape and is disposed on the side of the lens 420 towards the transparent cover 100, and the light-shielding structure 500 is disposed coaxially with the lens 420. Further, the light-shielding structure 500 and the lens 420 may be integrally formed by a two-color injection molding process to enable the light-shielding structure 500 to support the transparent cover 100, thereby increasing a sealing between the light-shielding structure 500 and the transparent cover 100, and thus preventing the light emitted from the display panel 300 from "leaking" to the lens 420. The light-shielding structure 500 may be made of a soft rubber, such as liquid silicone or thermoplastic polyurethane elastomer rubber (such as TPU, etc.), so that the lens 420 and the transparent cover 100 are changed from a rigid contact to a flexible contact. A width W1 of the light-shielding structure 500 may be 0.1-0.5mm, and further 0.1-0.3mm. The width W1 of the light-shielding structure 500 in the present embodiment may be 0.1mm or 0.2mm. Furthermore, the compression deformation of the first surface 110 of the light-shielding structure 500 holding the transparent cover 100 is 0.05-0.1mm, that is, the light-shielding structure 500 is in a micro-compression deformation. The above compression deformation is a dimensional deformation of the light-shielding structure 500 in the direction of the first surface 110 vertical to transparent cover 100 (i.e., a thickness direction of the electronic device). A pre-interference amount for the light-shielding structure 500 and the transparent cover 100 when the camera module 400 is assembled to the electronic device, it is required to ensure that the light-shielding structure 500 is pressed, or reliably held, against the first surface 110 of the transparent cover 100.

In some other embodiments, the light-shielding structure 500 may be a light-blocking glue, the light-blocking glue may be molded to at least one of the transparent cover 100, the lens 420, and the non-display area 310 of the display panel 300 by a dispensing process and so on. In some other embodiments, the light-shielding structure 500 may also be a light-blocking tape or a light-blocking ink layer, the light-blocking tape is affixed on at least one of the transparent cover 100, the lens 420, and the non-display area 310 of the display panel 300, or the light-blocking ink layer is painted over at least one of the transparent cover 100, the lens 420, and the non-display area 310 of the display panel 300.

Please refer to FIG. 2 again, the area E in FIG. 2 is an assembly gap between the display panel 300 and the camera module 400, which is used as a reserved gap for assembling the camera module 400. A size of the assembly gap of the area E may be set between 0.1-0.5mm. As the above relevant description in FIG. 1, a larger assembly gap (a minimum of 0.8-0.9mm) is required in the related technology in order to set the foam 12. In comparison, the present embodiment may reduce the width of the black edge by more than 0.5mm by disposing the light-shielding structure 500 on the side of the lens 420 near the transparent cover 100, thus reducing the size of the assembly gap of the area E between the camera module 400 and the display panel 300 in FIG. 2, thus increasing the screen-to-body ratio of the electronic device.

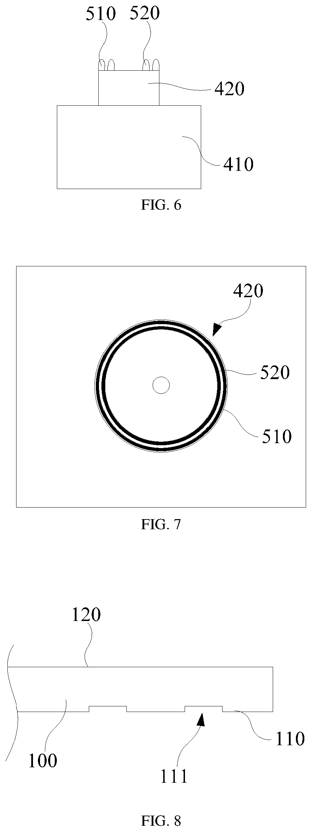

Please refer to FIG. 6 and FIG. 7, FIG. 6 is a schematic structural diagram of a side view of the camera module in FIG. 2 according to another embodiment of the present disclosure, and FIG. 7 is a schematic structural diagram of a top view of the camera module in FIG. 6.

Difference from the above embodiments is: in the present embodiment, the lens 420 of the camera module 400 is disposed with two ring-shaped light-shielding structures 500 on the side of the camera module 400 near the transparent cover 100 (a first light-shielding structure 510 and a second light-shielding structure 520). With such a double light-shielding structure design, a double guarantee may be achieved to ensure the reliability of the light-blocking effect.

A height of the first light-shielding structure 510 and a height of the second light-shielding structure 520 (the minimum distance between their vertices to the lens 420, not shown in the figures) may be set with a difference. For example, in the previous embodiment, the compression deformation of the light-shielding structure 500 may be 0.05-0.1mm. Then, a height difference between the first light-shielding structure 510 and the second light-shielding structure 520 of the present embodiment may be set as half of the above compression deformation, that is 0.025-0.05mm. This ensures that at least one of the first light-shielding structure 510 and the second light-shielding structure 520 is attached against the first surface 110 of the transparent cover 100. In addition, when either of the first light-shielding structure 510 and the second light-shielding structure 520 is damaged or fails, the other one may continue to support the first surface 110 of the transparent cover 100, thus ensuring the light-blocking reliability.

Further, the other structures of the present embodiment are the same or similar to those of any of the above embodiments and will not be repeated here.

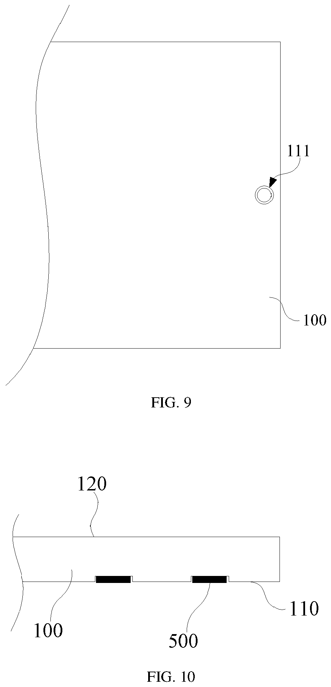

Please refer to FIG. 8 and FIG. 9, FIG. 8 is a schematic structural diagram of a side view of the transparent cover in FIG. 2 according to an embodiment, and FIG. 9 is a schematic structural diagram of a bottom view of the transparent cover in FIG. 8.

The present embodiment is mainly for further improvements of the structures of the transparent cover 100, the structural fit between the light-shielding structure 500 and the transparent cover 100. A notch 111 is defined on the first surface 110 of the transparent cover 100, and a ring-shaped opaque sheet (that is the light-shielding structure 500) is affixed on the notch 111. Further, the notch 111 may be reasonably designed according to a thickness of the transparent cover 100 and an overall strength of the transparent cover 100, and may also be larger than a thickness of the light-shielding structure 500.

Please refer to FIGS. 8 to 10, FIG. 10 is a schematic structural diagram of a light-shielding structure being affixed on a notch defined at a first surface of the transparent cover in FIG. 8. The advantage of such design structure is that the gap between the camera module 400 and the transparent cover 100 may be reduced, so that the camera module 400 may be closer to the transparent cover 100, and thus achieving the purpose of reducing the thickness of the electronic device. Certainly, in some other embodiments, it may also be the light-blocking ink layer coated on the notch 111, and may also be the light-blocking glue molded and formed in the notch 111 by a dispensing process. A structure of the notch 111 is not limited to the ring-shaped structure in the present embodiment, but may also be other shapes.

Further, the other structures of the present embodiment are the same or similar to those of any of the above embodiments and will not be repeated here.

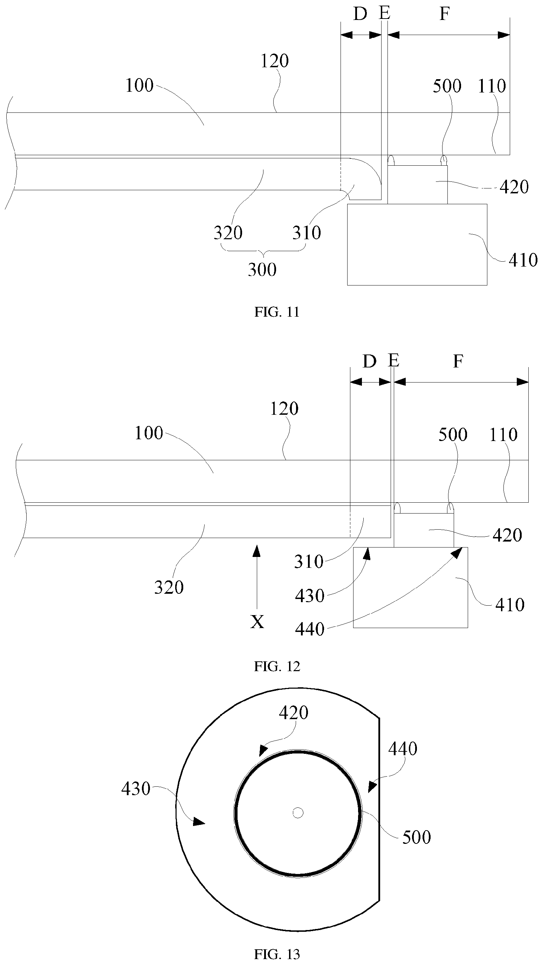

Please refer to FIG. 11, FIG. 11 is a schematic structural diagram of a partial side view of the electronic device according to another embodiment of the present disclosure.

The present embodiment is mainly for the further improvement of the structure of display panel 300. The display panel 300 is disposed at the side edge near the camera module 400 and is bent in a direction away from the transparent cover 100. Specifically, the non-display area 310 is bent in the direction away from the transparent cover 100; and an end face of the non-display area 310 may be disposed against the first extension surface 430. The advantage of such structural design is that by bending the non-display area 310 of the display panel 300, a size of the area D in FIG. 11 may be further reduced. The above embodiments are mainly for reducing a size of the area E in FIG. 11. In the present embodiment, the sizes of both D and E in FIG. 11 is reduced, which further reduces a sum of the sizes of the areas D, E, and F of the black edge of the electronic device, thus further increasing the screen-to-body ratio of the electronic device.

Further, the other structures of the present embodiment are the same or similar to those of any of the above embodiments and will not be repeated here.

Please refer to FIG. 12 and FIG. 13, FIG. 12 is a schematic structural diagram of a partial side view of the electronic device according to a further embodiment of the present disclosure, and FIG. 13 is a schematic structural diagram of a bottom view of the electronic device in FIG. 12 along the X-direction.

The present embodiment is mainly for the further improvement of the structure of the camera module 400, specifically, the structure of the holder 410. A width of the second extension surface 440 is less than a width of the first extension surface 430, as shown in FIG. 12 and FIG. 13, so that the holder 410 is an irregular structure. The advantage of such design structure is that, by partially reducing a size of the holder 410, it may make the holder 410 meet the installation and fixation requirements of the camera module 400, but also make the camera module 400 as a whole closer to a middle frame part of the housing 200, so as to reduce a size of the area F in FIG. 12, and to further reduce the size of the black edge, thereby increasing the screen-to-body ratio of the electronic device.

Optionally, the side of lens 41 away from the display panel 300 is disposed on the same side as a side of holder 410 away from the display panel 300, such that a width of the second extension surface 440 is 0. Therefore, a side of camera module 400 away from display panel 300 is flush with the transparent cover 100. At this point, the size of the area F in FIG. 12 is a size of the lens 420. For example, if a lens 420 with a diameter of 3.5mm is selected, then the size of the area F in FIG. 12 may be become 3.5mm.

Further, the other structures of the present embodiment are the same or similar to those of any of the above embodiments and will not be repeated here.

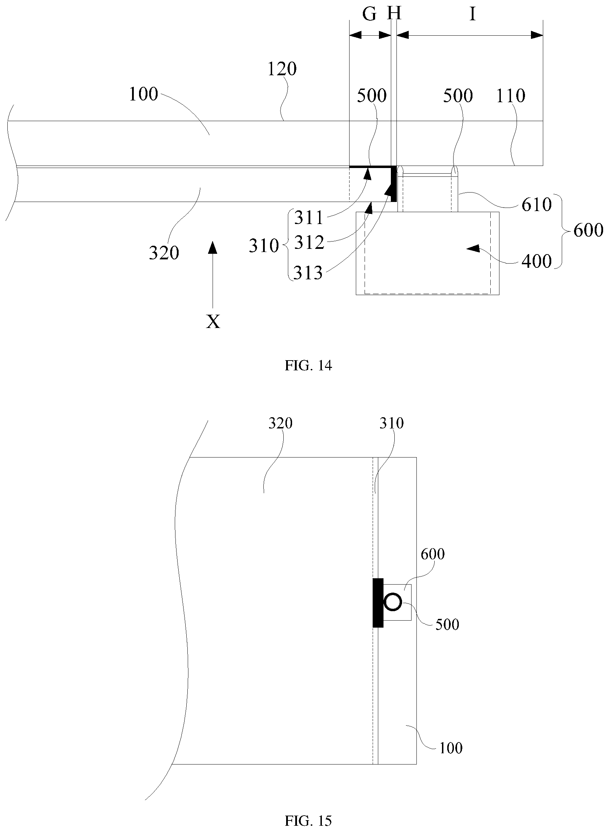

Please refer to FIG. 14 and FIG. 15, FIG. 14 is a schematic structural diagram of a partial side view of the electronic device according to yet a further embodiment of the present disclosure, and FIG. 15 is a schematic structural diagram of a bottom view of the electronic device in FIG. 14 along the X-direction.

In the present embodiment, the aperture diaphragm cover 610 is disposed on the side of the camera module 400 near the transparent cover 100, and the camera module 400 and the aperture diaphragm cover 610 are collectively referred to as the camera assembly 600. The aperture diaphragm cover 610 may be configured to limit the ambient light passing through the transparent cover 100, so that the camera module 400 may acquire different imaging effects. According to different application scenarios and needs, the aperture diaphragm cover 610 may be a hole diaphragm, a field of view diaphragm, a vignetting diaphragm, a light canceling diaphragm, and so on.

Optionally, the aperture diaphragm cover 610 is an individual structural component and detachable connected with the camera module 400 via snaps, threads, adhesives, and so on, thereby increasing the versatility of the camera assembly 600 and thereby enabling the camera module 400 to perform more functions. Certainly, in some other embodiments, the aperture diaphragm cover 610 and the camera module 400 (e.g. lens 420) may be an integrated structure, which may simplify the assembly process of the camera assembly 600 and increase the compactness of the structure.

The area G shown in FIG. 14 may represent the non-display area 310 (generally 0.95-1.5 mm) of the display panel 300, a width is generally determined by the structure of the display panel 300 itself and is outside the scope of this embodiment. Accordingly, an area of the display panel 300 except the non-display area 310 described above may represent the display area 320 for consumer interaction with the electronic device. The area H shown in FIG. 14 may represent the gap between the camera assembly 600 and the display panel 300. The area shown in I in FIG. 14 may represent a width from the camera assembly 600 to the edge of transparent cover 100. Therefore, a sum of the widths of the areas G, H, and I in FIG. 14 may represent the size of the black edge of the electronic device. In a full-screen design solution with narrow bezels, the main purpose is to minimize the sum of the widths of the areas G, H, and I so as to increase the screen-to-body ratio of the electronic device; and the present embodiment is to minimize the sizes of the area H and I.

Inventor of the present disclosure found, after a long period of research, that the diameter of the lens 420 of the aperture diaphragm cover 610 and the camera module 400 being the integrated structure is generally larger than 3mm. However, if the aperture diaphragm cover 610 and camera module 400 are separated into two individual structural components, the diameter of the lens 420 may be less than 3mm without affecting the imaging effect of the camera module 400, which provides the possibility to further increase the screen-to-body ratio of the electronic device.

The present embodiment is for further improvement of the structure of the camera assembly 600, specifically the structure of the aperture diaphragm cover 610. The aperture diaphragm cover 610 and the camera module 400 are two individual structural components, and the aperture diaphragm cover 610 may be placed over and cover the camera module 400. Moreover, the diameter of the lens 420 of the camera module 400 may be less than or equal to 3mm. The advantage of such structure design is that by separating the aperture diaphragm cover 610 from the camera module 400, the lens 420 of the camera module 400 may be made smaller, thus reducing a size of the area I in FIG. 14, to further reduce the size of the black edge and increase the screen-to-body ratio of the electronic device.

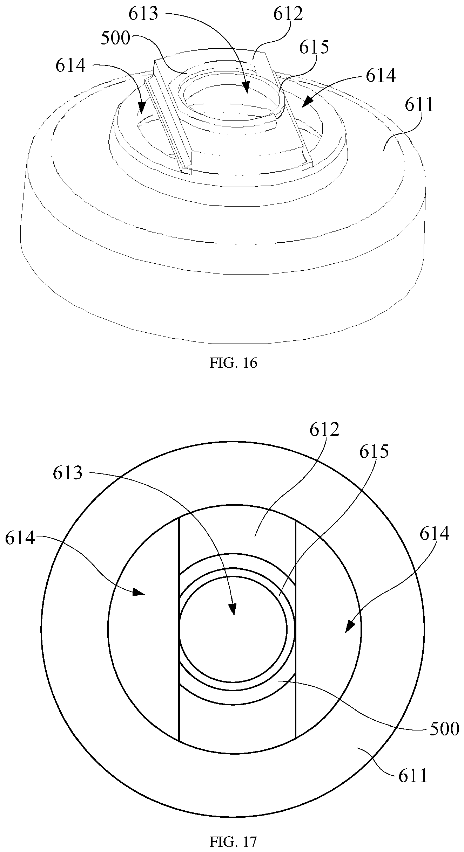

Please refer to FIGS. 14 to 16 together, FIG. 16 is a schematic structural diagram of an aperture diaphragm cover in FIG. 14 according to an embodiment.

The aperture diaphragm cover 610 includes a connecting part 611 and a functional part 612. The connecting part 611 is configured to connect to the camera module 400, specifically connected to the lens 420 of the camera module, or connected to both the lens 420 of the camera module 400 and the holder 410, so that the aperture diaphragm cover 610 and the camera module 400 may form a structural assembly. The functional part 612 is disposed corresponding to the lens 420 of the camera module 400, the functional part 612 is disposed with a through hole 613, and the through hole 613 serves as a light incident hole of the lens 420 of the camera module 400 to enable the ambient light passing through the transparent cover 100 to reach the camera module 400. Further, a diameter of the through hole 613 is less than a diameter of the lens 420 of the camera module 400, so that the aperture diaphragm cover 610 functions as a light shield for the lens 420. Furthermore, a size of the through hole 613 influences, to some extent, parameters such as the maximum inclination angle and the maximum field of view of the lens 420.

Optionally, the through hole 613 and the lens 420 of the camera module 400 are disposed coaxially, as shown in FIG. 14, so that the ambient light passing through the transparent cover 100 directly passes through the through hole 613 to the lens 420, thus enabling the electronic device, via the camera assembly 600, may realize the functions such as face recognition, photography, payment, and so on. Certainly, in some other embodiments, the through hole 613 may also be disposed not coaxially with the lens 420, for example, by disposing a prism between the through hole 613 and the lens 420, such a structure reflects the ambient light passing through the through hole 613 to the lens 420, which may also make the electronic device achieve the above function.

Further, an incision structure 614 is disposed at at least one side of the functional part 612, as shown in FIG. 16, and the incision structure 614 serves as an installation avoidance area for the camera assembly 600. In the present embodiment, an example of the following is taken. An incision structure 614 on both sides of the functional part 612 (i.e. the functional part 612 is disposed with two incision structures 614), and any one of the two incision structures 614 may serve as an avoidance area for camera assembly 600 and display panel 300.

Optionally, the incision structure 614 causes the functional part 612 to form a hollow-like structure with the connecting part 611 to allow the incision structure 614 to have a large enough holding space to increase the installation avoidance area of camera assembly 600. Further, the incision structure 614 is chamfered or rounded at a junction between the functional part 612 and the connecting part 611 to increase a structural strength of the junction, thereby increasing the reliability of the aperture diaphragm cover 610.

Please refer to FIGS. 14 to 17, FIG. 17 is a schematic structural diagram of a top view of the aperture diaphragm cover in FIG. 14 according to another embodiment of the present disclosure.

Difference from the above embodiments is: in the present embodiment, the incision structure 614 near the display panel 300 extends to be tangential to the through hole 613, to enable the display panel 300 to be tangential to the light incident hole of the camera assembly 600. Thus, the size of the area I in FIG. 14 may be further reduced so as to achieve a further reduction in the size of the black edge and increase the screen-to-body ratio of the electronic device.

Further, the other structures of the present embodiment are the same or similar to those of the above embodiment and will not be repeated here.

Referring to FIG. 14 and FIG. 15 again, a part of the structure of the display panel 300 (that is the non-display area 310) extends to the incision structure 614. At this point, a projection of the camera assembly 600 projected on the first surface 110 of the transparent cover 100 and a projection of the display panel 300 on the first surface 110 of the transparent cover 100 are at least partly overlapped. Specifically, a projection of the connecting part 611 projected on the first surface 110 of the transparent cover 100 and a projection of the non-display area 310 projected on the first surface 110 of the transparent cover 100 are at least partly overlapped, to reduce the size of the area I in FIG. 14, thereby achieving a purpose of reducing the size of the black edge, and thus increasing the screen-to-body ratio of the electronic device.

Furthermore, the light-shielding structure 500 is disposed at between the display panel 300 and the camera assembly 600, and the light-shielding structure 500 is configured to block the light emitted by the display panel 300 to avoid the light emitted from the display panel 300 from interfering with the camera assembly 600. Since the aperture diaphragm cover 610 may be a hollow structure, the light-shielding structure 500 is mainly disposed in the display panel 300 and areas near the display panel 300. Specifically, the non-display area 310 includes a first contact surface 311 and a second contact surface 312 disposed away from each other, and a side surface 313 connecting to the first contact surface 311 and the second contact surface 312, and the first contact surface 311 is disposed near the transparent cover 100. The light-shielding structure 500 is disposed between the first contact surface 311 and the transparent cover 100, and the light-shielding structure 500 is disposed on the side surface 313.

Optionally, the light-shielding structures 500 disposed between the first contact surface 311 and the transparent cover 100, and disposed on the side surface 313, are made of soft rubber, for example, liquid silicone or thermoplastic polyurethane elastomer rubber, to cause the display panel 300, the transparent cover 100 and aperture diaphragm cover 610 to change from a rigid contact to a flexible contact. In this way, the light-shielding structure 500 may support the transparent cover 100, the display panel 300 and the aperture diaphragm cover 610. On the one hand, the light-shielding structure 500 may increase the sealing between the transparent cover 100, display panel 300 and aperture diaphragm cover 610, thus preventing the light emitted from the display panel 300 from "leaking" to the camera module 400. On the other hand, the light-shielding structure 500 may be also used for a flexible buffering function between the three. Optionally, a hardness of the light-shielding structure 500 may be less than a hardness of the aperture diaphragm cover 610. Certainly, in some other embodiments, the hardness of the light-shielding structure 500 and the aperture diaphragm cover 610 may be the same or similar. The aperture diaphragm cover 610 may also be made of resin, plastic or rubber, etc., which will not be limited herein, as long as the aperture diaphragm cover 610 may be reliably connected to the camera module 400 and easily assembled.

Optionally, in the present embodiment, the compression deformation of the light-shielding structure 500 supporting the transparent cover 100 may be 0.05-0.1mm, that is, the light-shielding structure 500 is in a slightly compressed deformation. As a reliable and practical product embodiment, the compression deformation of the light-shielding structure 500 in the present embodiment may be 0.08 mm. The above mentioned compression deformation may be a size deformation in a direction of the light-shielding structure 500 vertical to the transparent cover 100 (that is the thickness direction of the electronic device). Further, the width of the light-shielding structure 500 is less than or equal to 0.3 mm, thus minimizing a size of the area H in FIG. 14. In the present embodiment, the width of the light-shielding structure 500 may be 0.1-0.3mm, and further 0.1-0.2mm. As a reliable and practical product embodiment, the width of the light-shielding structure 500 in the present embodiment may be 0.15 mm.

In some other embodiments, the light-shielding structures 500 disposed between the first contact surface 311 and the transparent cover 100 and disposed on the side surface 313 may be a light-blocking glue, which may be molded on the first contact surface 311 and the side surface 313 of the non-display area 310 of the display panel 300 by a dispensing process and so on. A thickness of the light-blocking glue may prevent the light emitted from the display panel 300 from "leaking" to the camera module 400. A thickness of the light-blocking glue is as small as possible, so as to reduce not only the size of the area H in FIG. 14, but also the thickness of the electronic device. In some other embodiments, the light-shielding structures 500 disposed between the first contact surface 311 and the transparent cover 100 and disposed on the on the side surface 313 may also be a light-blocking tape or a light-blocking ink layer. The light-blocking tape is affixed on the non-display area 310 of the display panel 300, or the light-blocking ink is coated on the non-display area 310 of the display panel 300. A thickness of the light-blocking tape or the light-blocking ink layer is as such, the light emitted from the display panel 300 is prevented from "leaking" into the camera module 400. The thickness of the light-blocking tape or the light-blocking ink layer is as small as possible to reduce not only the size of the area H in FIG. 14, but also the thickness of the electronic device. Certainly , in some other embodiments, the light-shielding structures 500 disposed between the first contact surface 311 and the transparent cover 100 and disposed on the side surface 313 may also be different. For example, the light-shielding structure 500 disposed between the first contact surface 311 and the transparent cover 100 is a light-blocking tape; the light-shielding structure 500 disposed on the side surface 313 is a light-blocking ink layer.

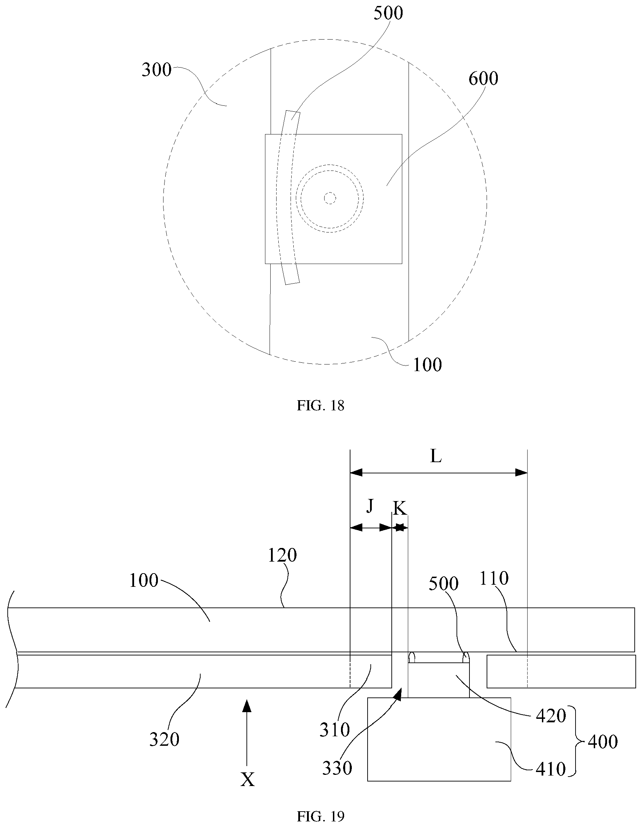

Please refer to FIG. 18, FIG. 18 is a schematic structural diagram of a partially enlarged area of the light-shielding structure in FIG. 15 according to another embodiment of the present disclosure.

Different from the above embodiments, the light-shielding structure 500 disposed between the display panel 300 and the camera assembly 600 in the present embodiment is arranged in an arc-shape, and the arc-shaped light-shielding structure 500 is bent towards the camera assembly 600. The advantage of such structure design is that, using a shorter light-shielding structure 500, it is also possible to achieve a good light-blocking effect, that is, to reduce the impact of the light emitted by the display panel 300 on the camera assembly 600.

Further, the other structures of the present embodiment are the same or similar to those of the above embodiment and will not be repeated here.

Please refer to FIG. 16 again, the light-shielding structure 500 is disposed at one side of the functional part 612 away from the camera module 400, and the light-shielding structure 500 is further configured to block the light emitted by the display panel 300, to prevent the light emitted by the display panel 300 from interfering with the camera assembly 600. At this point, the light-shielding structure 500 may be not be disposed on the non-display area 310 (such as the first contact surface 311) of the display panel 300, which may also achieve a good light-blocking effect.

The light-shielding structure 500 is disposed in ring-shape and is coaxially disposed with the through hole 613. Further, the light-shielding structure 500 and the functional part 612 may be integrally formed by a two-color injection molding process, so that the light-shielding structure 500 may support the transparent cover 100, thereby increasing the sealing between the light-shielding structure 500 and the transparent cover 100, thereby preventing the light emitted from the display panel 300 from "leaking" to the lens 420. The light-shielding structure 500 may be made of soft rubber, such as liquid silicone or thermoplastic polyurethane elastomer rubber, so that the lens 420 and the transparent cover 100 are changed from a rigid contact to a flexible contact. The width of the light-shielding structure 500 may be 0.1-0.5mm, and further may be 0.1-0.3mm; and the width of the light-shielding structure 500 in the present embodiment may be 0.1mm or 0.2mm. Furthermore, the compression deformation of the first surface 110 of the light-shielding structure 500 supporting the transparent cover 100 is 0.05-0.1mm, that is, the light-shielding structure 500 is in a micro-compression deformation. The above compression deformation is the dimensional deformation of the light-shielding structure 500 in the direction of the first surface 110 vertical to the transparent cover 100 (that is the thickness direction of the electronic device); that is, the pre-interference amount for the light-shielding structure 500 and the transparent cover 100 when the camera module 400 is assembled to the electronic device. To ensure that the light-shielding structure 500 is pressed or reliably supports against the first surface 110 of the transparent cover 100.

Furthermore, the position-retaining wall 614 is disposed at one side of the functional part 612 away from the camera module 400, the position-retaining wall 614 is disposed between the light-shielding structure 500 and the through hole 613. The position-retaining wall 614 is configured to contain a position relationship between the light-shielding structure 500 and the through hole 613 to prevent the light-shielding structure 500 made of soft rubber from moving towards the through hole 613 when the light-shielding structure 500 is damaged or fails, thereby preventing the through hole 613 from becoming smaller as a result of the above, and leaving the area of field of view of lens 420 unaffected. In some embodiments, the light-shielding structure 500 and the functional part 612 are integrally formed by a two-color injection molding process. In this case, a height of the position-retaining wall 614 is less than a height of the light-shielding structure 500 to prevent the position-retaining wall 614 from limiting the area of the field of view of the lens 420. In some other embodiments, the position-retaining wall 614 is defined around the through hole 613 and the light-shielding structure 500 is defined around a periphery of the position-retaining wall 615 away from the through hole 613. At this point, the light-shielding structure 500 may be made of a light-blocking tape attached to the position-retaining wall 614 or a light-blocking ink layer coated on the position-retaining wall 614; and, the light-shielding structure 500 may surround at least half of the position-retaining wall 614, and this part of the light-shielding structure 500 may acquire a good light-blocking effect towards the display panel 300.

The following is a brief introduction to the electronic device having a screen with a hole-like notch.

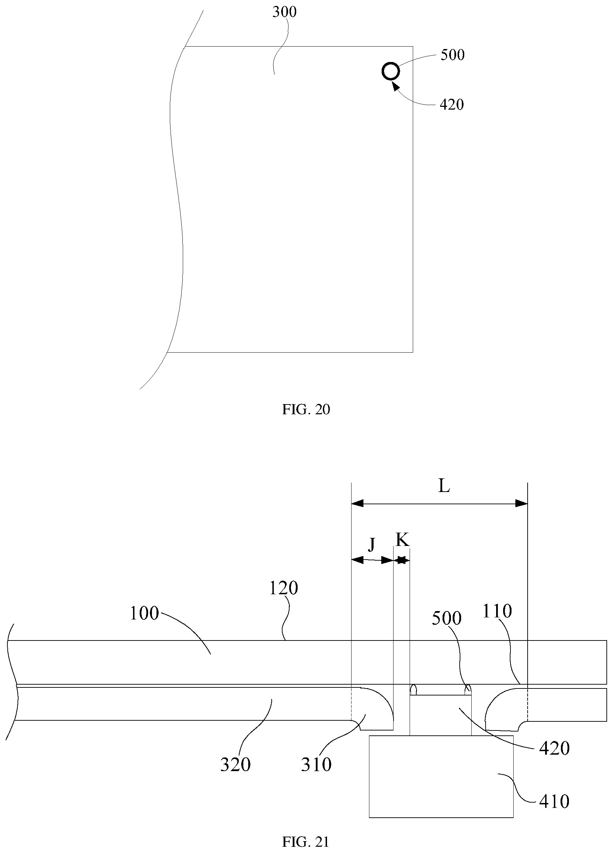

Please refer to FIG. 19 and FIG. 20, FIG. 19 is a schematic structural diagram of a partial side view of an electronic device according to the embodiment of the present disclosure, and FIG. 20 is a schematic structural diagram of a bottom view of the electronic device in FIG. 19 along the X-direction.

The electronic device in the present embodiment includes, but not limited to, the transparent cover 100, the housing 200, the display panel 300, the camera module 400, and the light-shielding structure 500. The housing 200 is connected to the display panel 300 to enclose together to define a housing space 210, the display panel 300, the camera module 400, the light-shielding structure 500 and other structural components are disposed in the housing space 210.

The transparent cover 100 includes a first surface 110 and a second surface 120 defined away from each other, which may be made of glass or transparent resin, corresponding to a rigid screen or a flexible screen. The display panel 300 is affixed on the first surface 110 of the transparent cover 100, thus a thickness of the electronic device may be reduced and a touch sensitivity of the display panel 300 is also increased. The light through hole 330 is defined in the display panel 300, and serves as a light incident hole of the camera module 400. The second surface 120 of the transparent cover 100 serves as an outer surface of the electronic device for consumer interaction with the electronic device and may be configured to receive touch operations such as clicks, swipes, etc. from the user. Certainly, in some other embodiments, the second surface 120 may also be disposed with other film layers such as a tempered film, a frosted film, a decorative film, an anti-peep film, a water condensation film, and so on, so that the electronic device provides different experience effects to the consumers.

The camera module 400 and the display panel 300 are disposed on the same side of the transparent cover 100, for example, both are disposed on the side near the first surface 110. Further, the lens 420 of the camera module 400 is disposed corresponding to the light through hole 330, and faces the first surface 110 of the transparent cover 100. A ring-shaped light-shielding structure 500 is disposed at the lens 420 of the camera module 400 on the side near the transparent cover 100, and the light-shielding structure 500 supports the first surface 110 of the transparent cover 100, wherein the first surface 110 corresponding to the area of the light through hole 330. The light-shielding structure 500 is configured to block the light emitted from the display panel 300, to avoid the light emitted from the display panel 300 from interfering with the camera module 400.

Optionally, the width of the light-shielding structure 500 may be 0.1-0.5mm, and further 0.1-0.3mm; and the width of the light-shielding structure 500 in the present embodiment may be 0.1mm or 0.2mm. The compression deformation amount of the first surface 110 of the transparent cover 100 is 0.05-0.1mm, wherein the compression deformation is the dimension of the light-shielding structure 500 in the direction vertical to the first surface 110 (that is the thickness of the electronic device), that is, the pre-interference amount of the light-shielding structure 500 and the transparent cover 100 when the camera module 400 is assembled to the electronic device. The light-shielding structure 500 is pressed or reliably supports against the first surface 110 of the transparent cover 100.

Further, for the specific structure and relationship between the camera module 400 and the light-shielding structure 500, please refer to the relevant description of any of the above embodiments, which will not be repeated here.

An area J shown in FIG. 19 may represent the non-display area 310 (generally 0.95-1.5 mm) of the display panel 300, a width is generally determined by the structure of the display panel 300 itself and is beyond the scope of the present embodiment. Accordingly, the areas of the display panel 300 except the non-display area 310 described above may represent the display area 320 for consumer interaction with the electronic device. An area K shown in FIG. 19 may represent an assembly gap between the display panel 300 and the camera module 400, which serves as a reserved gap for assembling the camera module 400. A size of the assembly gap of the area K may be set between 0.1 and 0.5 mm. As the relevant description in FIG. 1, a larger assembly gap (minimum 0.8-0.9mm) is required in the related technology in order to dispose the foam 12. In comparison, the present embodiment may greatly reduce the size of the assembly gap of the area K between the camera module 400 and the display panel 300 in FIG. 19, thereby increasing the screen-to-body ratio of the electronic device. An area L shown in FIG. 19 may represent the size of the black circle of the electronic device (shown as a dashed line in FIG. 20). Certainly, in some other embodiments, the light through hole 330 may also be in other shapes, and this example only illustrates the light through hole 330 as a round hole. In the full-screen design scheme of the screen with a hole-like notch, the main purpose is to minimize a size of the area L, so as to increase the screen-to-body ratio of the electronic device.

Similarly, the present embodiment may also provide an aperture diaphragm cover (not shown in FIG. 19) disposed on the side of the camera module 400 near the transparent cover 100, and the aperture diaphragm cover and camera module 400 are two individual components. The advantage of such structural design is that by separating the aperture diaphragm cover from the camera module 400, the lens 420 of the camera module 400 may be made smaller. Thus, the size of the area L in FIG. 19 may be reduced, and the size of the black circle may be further reduced.

Further, for the specific structure of the light shield and the relationship between the camera module 400 and the light-shielding structure 500, please refer to the relevant description of any of the above embodiments, which will not be repeated here.

Please refer to FIG. 21, FIG. 21 is a schematic structural diagram of a partial side view of the electronic device according to another embodiment of the present disclosure.

The present embodiment is mainly for further improvement of the structure of the display panel 300. The side edge of display panel 300 near the camera module 400 is bent in a direction away from the transparent cover 100. Specifically, the non-display area 310 is bent in the direction away from the transparent cover 100; and the end face of the non-display area 310 may be attached against the first extension surface 430. The advantage of such a design structure is that by bending the non-display area 310 of the display panel 300, the size of the area J in FIG. 21 may be further reduced. The above mentioned embodiment is mainly for reducing the size of the area K in FIG. 21. In the present embodiment, the size of both the areas J and K in FIG. 21 is reduced, which further makes the size of the area L of the black circle of the electronic device smaller, thus further increasing the screen-to-body ratio of the electronic device.

Further, the other structures of the present embodiment are the same or similar to those of the above embodiments and will not be repeated here.

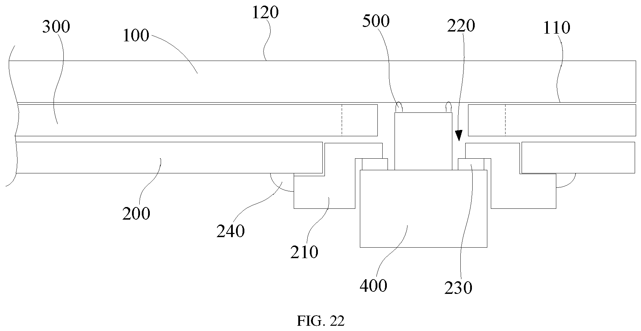

Referring to FIG. 22, FIG. 22 is a schematic structural diagram of a partial side view of the electronic device according to further another embodiment of the present disclosure.

In the present embodiment, the camera module 400 is fixed to the housing 200 by a bracket 210, where the housing 200 may be a middle frame part of the electronic device. Further, a mounting hole 220 is defined on the housing 200, the bracket 210 is embedded in the mounting hole 220, and the camera module 400 is rigidly connected to the bracket 210 and the connection is drilled into the mounting hole 220.

Optionally, a foam 230 may be disposed between the camera module 400 and the bracket 210. On the one hand, the foam 230 may play a role for vibration damping. and on the other hand, may play a role for attaching and fixation, specifically for fixing the camera module 400 in the up and down directions. An outer diameter of the camera module 400 and an inner diameter of the bracket 210 are fixed together, to settle the left and right directions of the camera module 400. Further, the bracket 210 and the housing 200 may be clamped, or attached by dispensing 240.

All directional indications (such as up, down, left, right, forward, back ...) in the present embodiment are used only to explain the relative position relationship, movement, and so on. between the components in a particular pose (as shown in FIG. 22), and if that particular pose is changed, the directional indications are changed accordingly.

The present embodiment may realize the fixation of the camera module 400 by designing the structure of the housing 200 and the bracket 210. In addition, the housing 200 has a mounting hole 220, and the camera module 400 is inserted into the mounting hole 220, which may reduce the thickness of the electronic device.

Further, the other structures of the present embodiment are the same or similar to those of the above embodiments and will not be repeated here.

The above mentioned are only some of the embodiments of present disclosure, and are not intended to limit the scope of protection of present disclosure. Any equivalent device or equivalent process transformation made by using the contents of the specification and the accompanying drawings, or applied directly or indirectly in other related technical fields, are equally included in the scope of protection of the present disclosure.

## Claims

1. A camera assembly, wherein the camera assembly comprises a camera module and an aperture diaphragm cover, the aperture diaphragm cover comprises a connecting part and a functional part that are in an integrated structure, the connecting part is configured to be connected to the camera module, the functional part is disposed correspondingly to a lens of the camera module, a through hole is defined in the functional part, and the through hole is configured to be a light incident hole of the lens of the camera module.

2. The camera assembly as claimed in claim 1, wherein an incision structure is disposed at at least one side of the functional part, and the incision structure is configured to be an installation avoidance area for the camera assembly.

3. The camera assembly as claimed in claim 1, wherein a light-shielding structure is disposed at one side of the functional part away from the camera module.

4. The camera assembly as claimed in claim 3, wherein the light-shielding structure and the functional part are integrally formed by a two-color injection molding process.

5. The camera assembly as claimed in claim 3, wherein a hardness of the light-shielding structure is less than a hardness of the aperture diaphragm cover.

6. The camera assembly as claimed in claim 5, wherein the light-shielding structure is made of soft rubber.

7. The camera assembly as claimed in claim 3, wherein a position-retaining wall is disposed at one side of the functional part away from the camera module, the position-retaining wall is disposed between the light-shielding structure and the through hole, the position-retaining wall is configured to constrain a position relationship between the light-shielding structure and the through hole, and a height of the position-retaining wall is less than a height of the light-shielding structure.

8. The camera assembly as claimed in claim 7, wherein the position-retaining wall is defined around the through hole, the light-shielding structure is defined around a periphery of the position-retaining wall away from the through hole, and the light-shielding structure surrounds at least half of the position-retaining wall.

9. The camera assembly as claimed in claim 1, wherein the through hole and the lens of the camera module are disposed coaxially, and a diameter of the through hole is less than a diameter of the lens of the camera module.

10. An electronic device, comprising:
a transparent cover comprising a first surface and a second surface defined away from each other;
a display panel affixed on the first surface of the transparent cover, wherein an area of the display panel is less than an area of the first surface;
a camera assembly disposed on the same side of the transparent cover as the transparent cover, wherein the camera assembly comprises a camera module and an aperture diaphragm cover, the aperture diaphragm cover comprises a connecting part and a functional part that are in an integrated structure, the connecting part is configured to be connected to the camera module, the functional part is disposed correspondingly to a lens of the camera module, a through hole is defined in the functional part, and the through hole is configured to be a light incident hole of the lens of the camera module; and
a projection of the connecting part projected on the first surface of the transparent cover and a projection of the display panel projected on the first surface of the transparent cover are at least partly overlapped.

11. The electronic device as claimed in claim 10, wherein an incision structure is disposed at at least one side of the functional part, a part of the display panel extends to the incision structure, and the incision structure is configured to be a cooperative installation avoidance area for the camera assembly and the display panel.

12. The electronic device as claimed in claim 10, wherein a light-shielding structure is disposed at the functional part extending towards the transparent cover, the light-shielding structure supports the first surface of the transparent cover, and the light-shielding structure is configured to block light emitted by the display panel to avoid the light emitted by the display panel from interfering the camera module.

13. The electronic device as claimed in claim 10, wherein the display panel comprises a display area and a non-display area, the display area and the non-display area are disposed adjacently, or a part of the display area surrounds the non-display area, a projection of the non-display area projected on the first surface of the transparent cover and a projection of the display area projected on the first surface of the transparent cover are at least partly overlapped.

14. The electronic device as claimed in claim 13, wherein the non-display area comprises a first contact surface and a second contact surface disposed away from each other, and a side surface connecting to the first contact surface and the second contact surface, the first contact surface is disposed near the transparent cover, a light-shielding structure is disposed at between the first contact surface and the transparent cover, and a light-shielding structure is disposed on the side surface.

15. The electronic device as claimed in claim 10, wherein the display panel comprises a display area and a non-display area, the display area and the non-display area are disposed adjacently, or a part of the display area surrounds the non-display area, a projection of the non-display area projected on the first surface of the transparent cover and a projection of the display area projected on the first surface of the transparent cover are at least partly overlapped; the non-display area comprises a first contact surface and a second contact surface disposed away from each other, and a side surface connecting to the first contact surface and the second contact surface, the first contact surface is disposed near the transparent cover, a light-shielding structure is disposed at between the first contact surface and the transparent cover, and a light-shielding structure is disposed on the side surface; wherein the light-shielding structure between the first contact surface and the transparent cover in the non-display area is a light-blocking tape or a light-blocking ink.

16. The electronic device as claimed in claim 15, wherein the light-shielding structure of the side surface in the non-display area is a light-blocking ink.

17. An aperture diaphragm cover for a camera module, wherein the aperture diaphragm cover comprises a connecting part and a functional part that are in an integrated structure, the connecting part is configured to be connected to the camera module, the functional part is disposed correspondingly to a lens of the camera module, a through hole is defined in the functional part, and the through hole is configured to be a light incident hole of the lens of the camera module.

18. The aperture diaphragm cover as claimed in claim 17, wherein a light-shielding structure is disposed at one side of the functional part away from the camera module.

19. The aperture diaphragm cover as claimed in claim 18, wherein a position-retaining wall is disposed at one side of the functional part away from the camera module, the position-retaining wall is disposed between the light-shielding structure and the through hole, the position-retaining wall is configured to constrain a position relationship between the light-shielding structure and the through hole, and a height of the position-retaining wall is less than a height of the light-shielding structure.

20. The aperture diaphragm cover as claimed in claim 19, wherein the position-retaining wall is defined around the through hole, the light-shielding structure is defined around a periphery of the position-retaining wall away from the through hole, and the light-shielding structure surrounds at least half of the position-retaining wall.
